# EUROPEAN PATENT APPLICATION

(11) **EP 4 224 503 A1**
(43) Date of publication of application: **09.08.2023**
(21) Application number: 21875381.2
(22) Date of filing: 24.09.2021
(51) Int. Cl.: H01G 11/74, H01G 9/008, H01G 9/12, H01G 11/14, H01G 11/78, H01M 50/172, H01M 50/183, H01M 50/531, H01M 50/572

(54) **STORAGE CELL AND METHOD FOR MANUFACTURING SAME**

(30) Priority: 30.09.2020 JP 2020164905
(71) Applicant: Nippon Chemi-Con Corporation, Tokyo 141-8605 (JP)
(72) Inventor: KIMURA, Toshiki, Tokyo 141-8605 (JP); KUROKI, Takashi, Tokyo 141-8605 (JP); HAGIYA, Masayuki, Tokyo 141-8605 (JP); TSUMEDA, Satoru, Tokyo 141-8605 (JP)
(74) Representative: Mewburn Ellis LLP
(86) International application number: PCT/JP2021/034931
(87) International publication number: WO 2022/071079

(57) **Abstract**

A storage cell disclosed includes: a storage element (8) having on its different end faces a cathode-side electrode tab (cathode tab 12) and an anode-side electrode tab (anode tab 10), respectively; a case (exterior case 4) accommodating the storage element within an accommodating part (6) having an opening (18); a current collector plate (14) formed integrally with an external terminal (16) and connecting to the electrode tab arranged on the opening side; and a sealing member (20) sealing the opening and deformable toward the opening by an internal pressure within the accommodating part, and the current collector plate is displaced toward the opening accompanying deformation of the sealing member so that connection with the electrode tab is released when a predetermined displacement amount is exceeded. This implements a current cutoff function dealing with rise in pressure within the case without impairing electrical characteristics of the storage element and the external terminal.

## Description

### TECHNICAL FIELD

The technique of the present disclosure relates to a current cutoff technique of a storage cell having raised internal pressure.

### BACKGROUND ART

Storage cells such as an electric double-layer capacitor and an electrolytic capacitor take measures to seal the interior of the case for the case opening, for the purpose of preventing foreign matter from entering or of preventing the outflow of electrolyte. In the storage cells, gas is generated by the chemical reaction of electrolyte during operation and fills the inside of the case, which induces rise in internal pressure of the case. In the storage cells, when the power is kept on in case that, for example, the internal pressure rises abnormally, the sealing means may come off from the case or the case itself may be damaged. Such a release of the sealing of the storage cell may affect equipment on which the storage cell is mounted, or a substrate or other components arranged around the storage cell.

A storage device is known (e.g., Patent Literature 1) that has a means of stopping power supply when an abnormality occurs in the storage cell, which is capable of releasing connection between an external terminal and an element by fitting a convex member via which the external terminal is formed on a lid disposed at the case opening into a concave member disposed at the tip of a terminal formed on the element.

### CITATION LIST

### PATENT LITERATURE

Patent Literature 1: Japan Utility Model Application Pub. No. S49-141322

### SUMMARY OF INVENTION

### TECHNICAL PROBLEM

To obtain required electric power, the storage cell needs to have sufficient strength in connection between the storage element and the external terminal and to keep the electrically connected state. The storage cell further needs to cutoff current securely when the internal pressure rises and reaches a predetermined allowable value or above.

However, in such a technique of interposing the fitting members such as the convex member and the concave member between the external terminal and the element for current cutoff, as in the technique described in the above prior art document, if the fitting degree is too strong, it may become difficult to release connection between the terminal and the element, whereas a weaker fitting degree may result in a weaker electrical connection during normal operation.

The contact resistance at the connecting portion between the fitting members may increase, resulting in lowering in electrical characteristics of the storage cell, and the increase in the number of components may bring complicated internal structure or increased assembling work load.

The inventor of the technique of the present disclosure gained knowledge that electrical connection with the external terminal can be released with a less number of components by physically breaking the storage element side against the raised pressure within the storage cell and that the contact resistance between the storage element and the external terminal can be reduced by not arranging the additional components at the connecting portion.

Patent Literature 1 neither discloses nor suggests such a problem, and the configuration disclosed in Patent Literature 1 cannot solve the problem.

It is therefore an object of the present disclosure to implement a current cutoff function dealing with rise in pressure within the case without impairing electrical characteristics of the storage element and the external terminal.

### SOLUTION TO PROBLEM

In order to achieve the above object, an aspect of a storage cell of the present disclosure includes: a storage element having on its different end faces a cathode-side electrode tab and an anode-side electrode tab, respectively; a case accommodating the storage element within an accommodating part having an opening; a current collector plate formed integrally with an external terminal and connecting to the electrode tab arranged on the opening side; and a sealing member sealing the opening and being deformable toward the opening by an internal pressure within the accommodating part, and the current collector plate is displaced toward the opening accompanying deformation of the sealing member so that connection with the electrode tab is released when a predetermined displacement amount is exceeded.

In the above storage cell, when the current collector plate is displaced toward the opening of the case, the electrode tab of the storage element breaks at a portion joining with the current collector plate or at its vicinity so that connection with the current collector plate is released.

In the above storage cell, the current collector plate and the electrode tab are welded together.

In the above storage cell, the sealing member has a through-hole at a part of sealing surface portion, the external terminal is fitted into the through-hole, and the sealing member is cramped from an outer circumferential surface of the case so as to come into press contact with the case.

The above storage cell further includes a space portion defined between the current collector plate and the sealing member.

The above storage cell includes a spacer having a mount on which at least a part of the sealing member is mounted, the spacer making the space portion formed between confronting surfaces of the sealing member and the current collector plate.

In the above storage cell, the spacer is formed to have a diameter smaller than width of the sealing member disposed on the opening side.

In the above storage cell, the electrode tab includes segmented portions obtained by segmenting electrode foils protruding from an end face of the storage element by a predetermined angle around a central portion of the element, the electrode tab including a plurality of connecting surface portions bent toward the end face for each of the segmented portions.

In the above storage cell, the case includes a cramping portion pressing an arrangement position of the storage element from exterior side, to bring an inner wall surface into contact with a part of a body portion of the storage element.

In order to achieve the above object, an aspect of a method for manufacturing a storage cell includes the steps of: forming a cathode-side electrode tab or an anode-side electrode tab on a different end face of a storage element by allowing a part of laminated cathode foils or anode foils to protrude from the different end face and bending protrusions thereof; accommodating the storage element within an accommodating part of a case having an opening on one side; connecting a current collector plate formed integrally with an external terminal to the electrode tab arranged on the opening side; and sealing the opening with a sealing member configured to deform toward the opening by an internal pressure within the accommodating part to displace the current collector plate.

The above method for manufacturing a storage cell further includes the step of forming a space portion between the current collector plate and the sealing member.

The method for manufacturing a storage cell includes the step of arranging a spacer having a mount on which at least a part of the sealing member is mounted, between confronting surfaces of the sealing member and the current collector plate to form the space portion.

### ADVANTAGEOUS EFFECTS OF INVENTION

According to the technique of the present disclosure, the following effects can be obtained.
(1) The cutoff function between the external terminal and the storage element of the storage cell can work normally in accordance with rise in the internal pressure of the case.
(2) The current cutoff between the storage element and the external terminal becomes possible by displacing the current collector plate connecting to the storage element along with the displacement of the sealing member toward the case opening caused by the raised internal pressure.
(3) Since the external terminal integrated with the current collector plate and having a diameter smaller than that of the current collector plate is subjected to the tensile force heading for the opening side by the displacement of the sealing member, the current collector plate can be displaced toward the opening side to release the connection with the storage element irrespective of the state of pressure within the interior of the case.

Other objects, features, and advantages of the technique of the present disclosure will become more apparent by referring to the accompanying drawings and the embodiments.

### BRIEF DESCRIPTION OF DRAWINGS

Fig. 1 is a view showing a configuration example of a storage cell according to a first embodiment, with A depicting a state example of the storage cell whose cutoff function is not working, B depicting a state example of the storage cell whose cutoff function is working.
Fig. 2 shows, in A, a state example of a connecting surface of a current collector plate in case that the cutoff function is working; and shows, in B, a state example of an electrode tab of the storage cell in the state of A.
Fig. 3 is an exploded view showing a configuration example of the storage cell.
Fig. 4 is a view showing a state where a storage element is being wound.
Fig. 5 shows, in A, an end face of the storage element when wound; and in B, a forming state example of the electrode tab.
Fig. 6 shows, in A, a sectional view of the electrode tab folded; and shows, in B, a state example of a press forming process of the electrode tab.
Fig. 7 is a view showing a state example where a welding process is performed on the current collector plate disposed on the storage element.
Fig. 8 shows, in A, a state example of the electrode tab and the current collector plate before displacement; shows, in B, a state example in case that internal pressure has risen; and shows, in C, a state example where the electrode tab and the current collector plate are disconnected from each other.
Fig. 9 is a view showing a configuration example of a storage cell according to a second embodiment.
Fig. 10 shows, in A, an exploded view of a configuration around a terminal component; and shows, in B, a sectional view of a configuration example of the cutoff function.
Fig. 11 shows, in A, a state example of the storage cell before the cutoff function works; and shows, in B, a state example of the storage cell in case that the cutoff function is working.
Fig. 12 is a view showing another configuration example of the current collector plate and an external terminal, A being an exploded view depicting a configuration of the terminal component and its vicinity, B being a sectional view depicting a configuration example of the cutoff function.
Fig. 13 is a view showing an internal configuration example of the storage cell in case that an exterior case includes a cramping portion.

### MODES FOR CARRYING OUT THE INVENTION

### [First Embodiment]

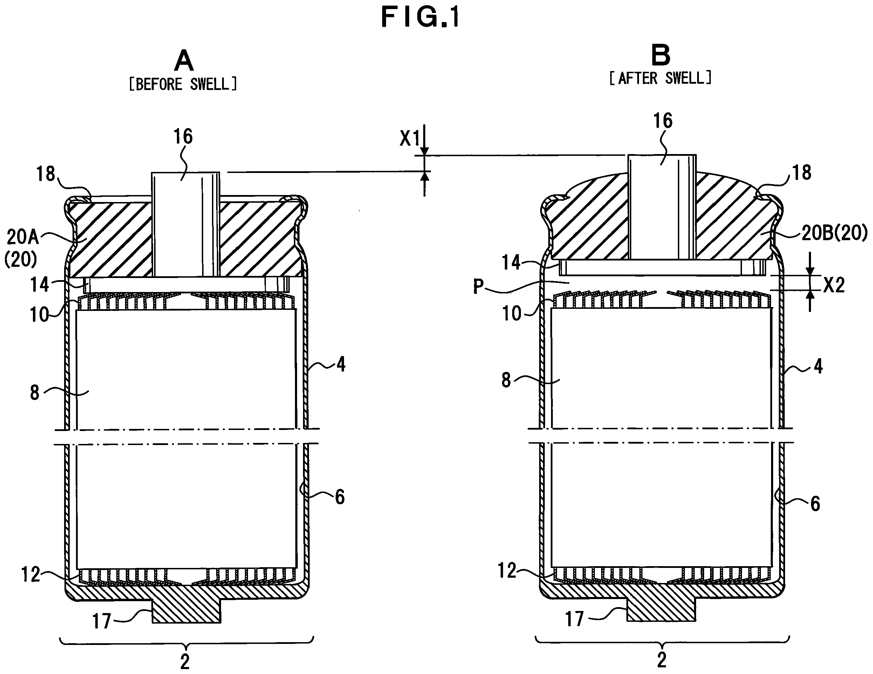

Fig. 1 shows a configuration example of a storage cell according to a first embodiment. The configuration shown in Fig. 1 is a mere example, and the technique of the present disclosure is not limited to such a configuration.

A storage cell 2 is, as shown in Fig. 1A for example, an example of an electric double-layer capacitor, an electrolytic capacitor, or another storage device, and includes a storage element 8 disposed in an accommodating part 6 inside an exterior case 4. The interior of the accommodating part 6 is charged with electrolyte or the like. This storage cell 2 is a device of a so-called axial structure that uses, for example, the storage element 8 having electrode portions with different polarities, i.e., an anode tab 10 and a cathode tab 12 formed on end faces of the storage element 8 in different directions. In the storage cell 2, for example, part or all of a tip of the anode tab 10 is connected to a single flat plate surface of a current collector plate 14.

The current collector plate 14 is formed integrally with an external terminal 16 for connecting the storage cell 2 to a substrate not shown or another electronic device, to allow the storage cell 2 to electrify it.

The external terminal 16 has a diameter smaller than the contour or the lateral width of the current collector plate 14 and is formed at a central portion or its vicinity on a circular plate surface of the current collector plate 14. As a result, in case of housed in the exterior case 4, the current collector plate 14 and the external terminal 16 are arranged in an inverted T shape in side profile.

The storage cell 2 includes a sealing member 20 arranged to seal an opening 18 side within the accommodating part 6. The sealing member 20 is a means that prevents foreign matter from entering the interior of the accommodating part 6 and that blocks leakage of electrolyte from the accommodating part 6. The sealing member 20 is made of, e.g., an insulating rubber or another rubber material, or a resin material.

The sealing member 20 allows passing through of the external terminal 16 projecting from the top surface of the current collector plate 14. At this time, the sealing member 20 is in press contact with a circumferential surface of the external terminal 16 so as to cut off contact between the accommodating part 6 and outside air through the external terminal 16.

In the storage cell 2, due to such a configuration, the external terminal 16 projects from the opening 18. In the storage cell 2, the cathode tab 12 of the storage element 8 is in direct contact with or connected via a current collecting member not shown to the bottom of the accommodating part 6. A cathode-side external terminal 17 is disposed on a bottom outer surface of the exterior case 4, the external terminal 17 connecting electrically through the exterior case 4 to the cathode tab 12.

### <About Internal State of Storage Cell 2>

In case that, for example, the storage cell 2 is in its pre-operation state or normal operation state, one surface of the current collector plate 14 is in contact with the anode tab 10 of the storage element 8 so that electrification is possible from the external terminal 16 to an electronic device not shown. At this time, within the interior of the accommodating part 6, gas from the chemical reaction of electrolyte has not yet been generated or the amount of the gas is less than or equal to a predetermined reference value.

In addition, the storage cell 2 may include a gas discharge means not shown, for example, in a part of the sealing member 20, by which means a certain amount of gas is discharged to the outside of the exterior case 4.

In the storage cell 2, the opening 18 is sealed by a sealing member 20A in its normal state. At this time, in the storage cell 2, the external terminal 16 is arranged at its initial position, with the cathode tab 12 of the storage element 8 remaining in contact with the bottom of the accommodating part 6.

For example, as shown in Fig. 1B, the storage cell 2 comes to have a raised internal pressure by gas not shown filling the interior of the accommodating part 6 due to an internal abnormality. At this time, within the exterior case 4, gas tends to flow to the opening 18 side where the sealing member 20 is disposed that has a rigidity lower than that of the inner wall surface of the case for example. For this reason, at the opening 18, there appears a sealing member 20B deformed by being pressed with a strong pressure from the accommodating part 6 side.

The sealing member 20B is displaced by being extruded toward the opening 18 relative to the sealing member 20A at the initial position before the pressure rise for example. Since the side surface of the external terminal 16 is in intimate contact with the sealing member 20, the external terminal 16 receives a tensile force directed toward the opening 18 accompanying the displacement of the sealing member 20B, to be displaced by a predetermined distance X1. Furthermore, since the current collector plate 14 is integrated with the external terminal 16, the current collector plate 14 is displaced toward the opening 18 due to the tensile force received by the external terminal 16.

At this time, since the storage element 8 is swelled by impregnation of electrolyte packed in the accommodating part 6 for example, the storage element 8 is kept at a predetermined position or at a position close thereto within the accommodating part 6.

In the storage cell 2, the current collector plate 14 is displaced toward the opening 18, whereas the storage element 8 is kept at the predetermined position, thereby releasing the connection between the anode tab 10 and the current collector plate 14 with a gap P of a predetermined distance X2 occurring therebetween. In this manner, the storage cell 2 has a current cutoff function to cutoff current flowing from the storage element 8 to the external terminal 16 by utilizing the displacement from the sealing member 20A at the initial position to the sealing member 20B accompanying the raised internal pressure.

### <About Current Collector Plate 14 and Anode Tab 10>

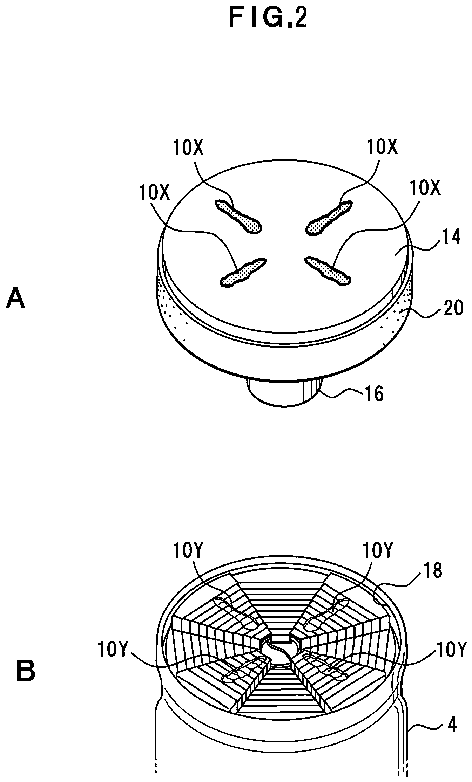

Fig. 2 shows a state example where connection between the current collector plate and the electrode tab is released due to the increased internal pressure. The state shown in Fig. 2 is an example.

For example, the current cutoff function of the storage cell 2 separates connecting portions of the current collector plate 14 and the anode tab 10. Specifically, the anode tab 10 is subjected to a tensile stress at the portion in contact with the current collector plate 14 or at its vicinity as a result of the displacement of the current collector plate 14 in the separation direction. The anode tab 10 breaks when a breaking strength of an electrode foil is exceeded, releasing the connection to the current collector plate 14. Thus, in case that the current cutoff function works, fragments 10X of the anode tab 10 adhere to the connecting surface of the current collector plate 14, as shown in Fig. 2A for example. Since the current collector plate 14 and the anode tab 10 are rigidly connected together by weld connection for example, weld portions remain left on the current collector plate 14 without breaking.

The anode tab 10 has tear marks 10Y formed by breaking and tearing the fragments 10X of connecting surface portions to the current collector plate 14, as shown in Fig. 2B for example.

### <About Configuration of Storage Cell 2>

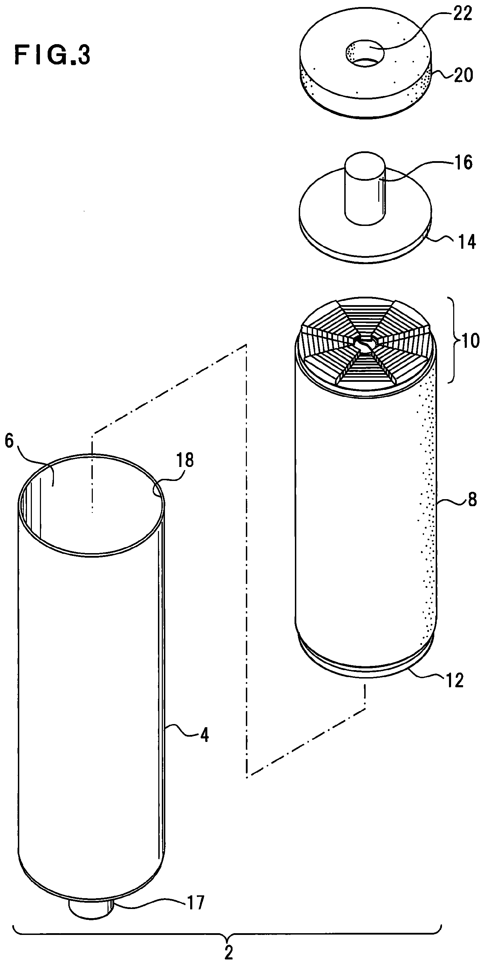

Fig. 3 shows an internal configuration example of the storage cell.

The storage cell 2 is configured as shown in Fig. 3 for example by inserting the storage element 8 through the opening 18 into the accommodating part 6 of the exterior case 4 and connecting the current collector plate 14 to one end side of the storage element 8, with the accommodating part 6 being sealed by the sealing member 20.

The exterior case 4 has the bottom on the one end side and the opening 18 on the other end side and is formed in a so-called bottomed cylindrical shape whose cross section is circular or polygonal. This exterior case 4 is made of, e.g., a material having corrosion resistance against contact with outside air and electrolyte packed inside and having flexibility allowing deformation by being partly cramped externally. The material can be a hard material that includes an aluminum alloy containing manganese or magnesium added, as well as a metal such as aluminum.

The storage element 8 is in the shape of a cylinder into which an anode foil and a cathode foil are wound. This storage element 8 has the anode tab 10 and cathode tab 12 formed on one end face side and the other end face side, respectively, of the cylinder wound.

The anode tab 10 and the cathode tab 12 are formed by partially bending their respective electrode foils in a predetermined direction.

The current collector plate 14 is connected electrically to a terminal connecting surface formed on a part of the end face of the anode tab 10 for example. The current collector plate 14 is made of, e.g., an aluminum alloy. For example, a connecting surface portion of the current collector plate 14 may be of a single flat plate shape or may include a plurality of regions with different widths or heights adapted to the shape of the anode tab 10 connected.

To connect the current collector plate 14 and the anode tab 10, for example, welding may be performed at a plurality of points on the flat plate surface or may be performed on the anode tab 10 from the lateral surface side of the current collector plate 14. The current collector plate 14 and the external terminal 16 formed integrally therewith are made of the same material for example, and they may be formed integrally; or may be connected and integrated together by e.g., welding different members.

When inserted into the accommodating part 6 of the exterior case 4, the cathode tab 12 preferably connects electrically to the external terminal 17 by bringing the cathode tab 12 into contact with the bottom and then welding the bottom surface portion from the outside of the exterior case 4.

The sealing member 20 is made of, e.g., an insulating rubber, other rubber material or a resin material. The sealing member 20 has the same outer shape as the accommodating part 6 and is formed in a circular, oval, or polygonal shape.

The sealing member 20 has, e.g., at a central portion or its vicinity, etc. on the flat plate surface, an insertion hole 22 into which the external terminal 16 is inserted. The opening diameter of the insertion hole 22 is, for example, the same as or smaller than the diameter of the external terminal 16. This allows the sealing member 20 and the external terminal 16 to be in intimate contact with each other.

### <About Configuration of Storage Element 8>

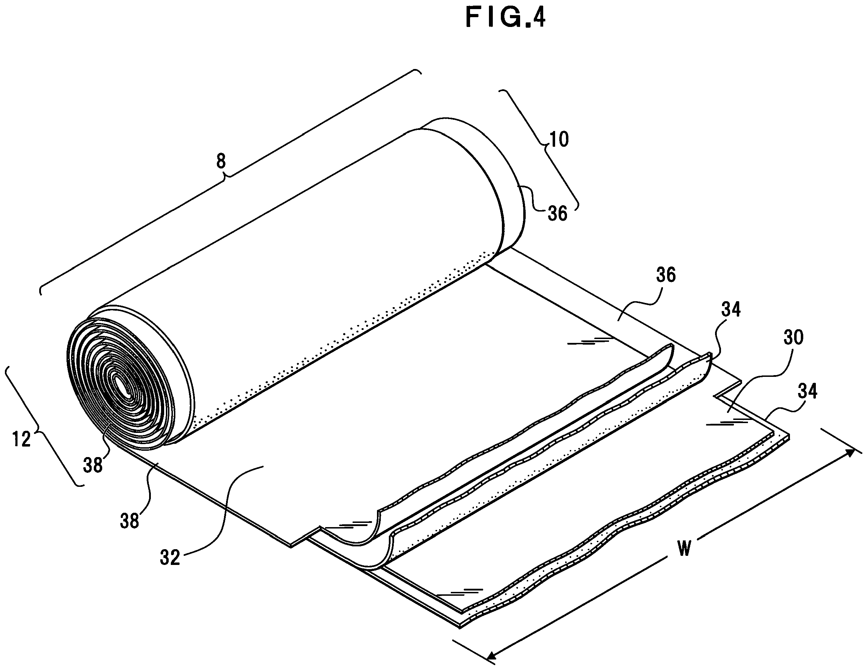

Fig. 4 shows a configuration example of the storage element.

As shown in Fig. 4 for example, the storage element 8 includes an anode foil 30 and a cathode foil 32 that are laminated via a separator 34, the laminate being wound in a predetermined direction into a cylindrical wound element.

The anode foil 30 and the cathode foil 32 each include an aluminum foil as a base material for example, the aluminum foil having, on its both surfaces, polarizable electrodes containing active material such as activated carbon, binding agent, etc.

The separator 34 is formed wider than the width of the anode foil 30 and the cathode foil 32, to insulate the anode foil 30 and the cathode foil 32 from each other.

The anode foil 30 has an anode protrusion 36 formed on a longitudinal-side portion on one hand along the winding direction for example.

The cathode foil 32 has a cathode protrusion 38 formed, along the winding direction for example, on a longitudinal-side portion different from the direction in which the anode protrusion 36 is formed.

The storage element 8 is wound keeping the laminated state with respect to a winding center not shown. In consequence, the storage element 8 has on one end face a laminate of the anode protrusion 36 and has on the other end face a laminate of the cathode protrusion 38. The formed laminates of the anode protrusion 36 and the cathode protrusion 38 are folded in their respective predetermined directions to be the anode tab 10 and the cathode tab 12, respectively.

In addition, a holding tape not shown may be wrapped around the storage element 8 to prevent rewinding of the anode foil 30 and the cathode foil 32.

### <About Electrode Tab>

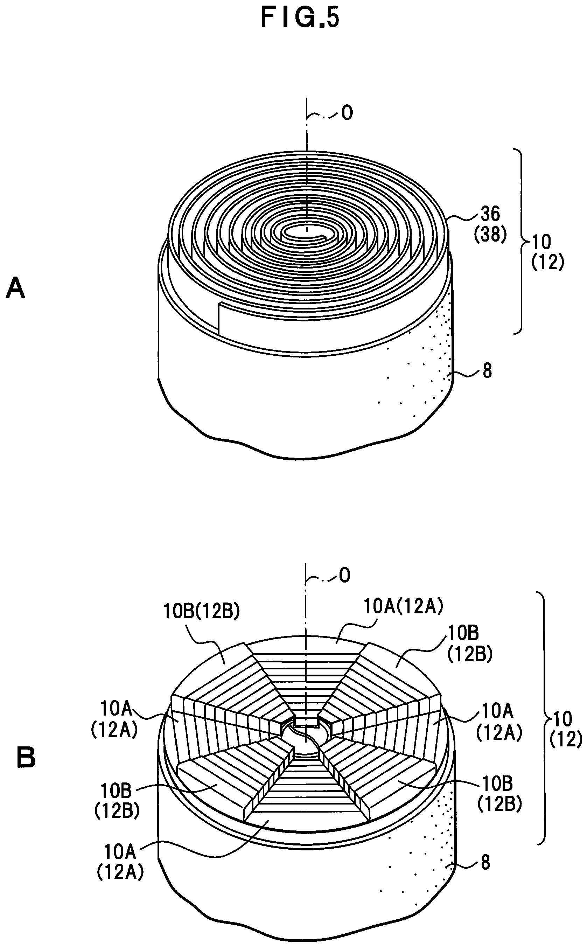

Fig. 5 shows a forming process example of the electrode tab.

The anode tab 10 or the cathode tab 12 of the storage element 8 is processed prior to connection to the current collector plate 14 or the case bottom so as to be formed in intimate contact with the element end face of the storage element 8. Either the anode protrusion 36 or the cathode protrusion 38 is disposed extending vertically as shown in Fig. 5A on each of the element end faces of the storage element 8.

On each of the element end faces, the vertically extending anode protrusion 36 for example is divided into a plurality of segmented portions by a predetermined angle in the circumferential direction with respect to a winding center O as a criterion. A mold is then pressed against the element end face side every other segment so that the anode protrusion 36 forms first segmented portions 10A bent at a low height and second segmented portions 10B bent at a height protruding higher than the first segmented portions 10A from the winding end face as shown in Fig. 5B.

In this storage element 8, first segmented portions 12A and second segmented portions 12B are preferably formed on the cathode protrusion 38 by using the same technique as in the anode protrusion 36.

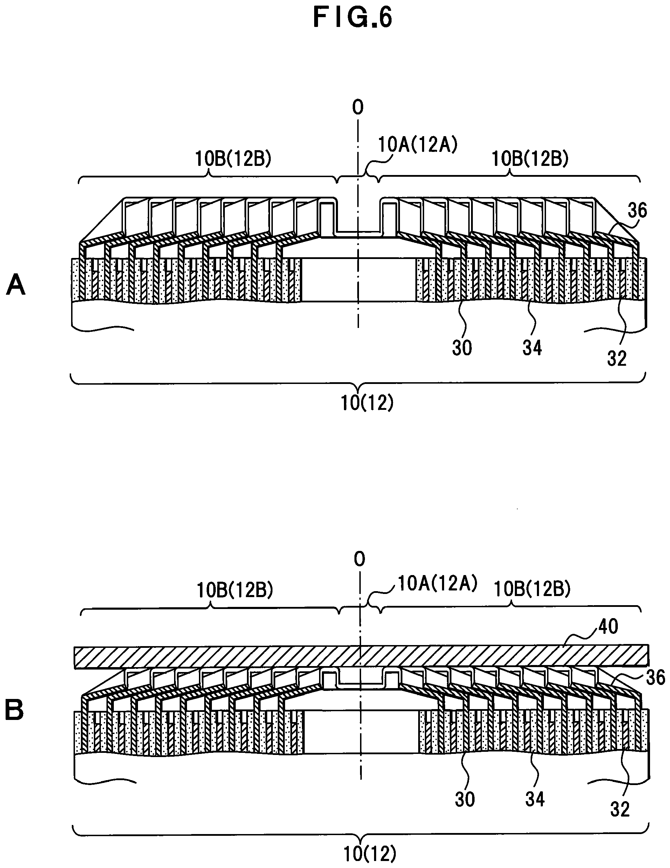

In the forming processes of the anode tab 10 and the cathode tab 12, posterior to forming the respective segmented portions 10A, 10B and 12A, 12B by bending the anode protrusion 36 or the cathode protrusion 38 for example, the segmented portions undergo a forming process so as to have a height allowing intimate contact with the current collector plate 14 or the bottom of the accommodating part 6. The anode tab 10 goes to a state as shown in Fig. 6A for example where the first segmented portions 10A and the second segmented portions 10B creased with a mold or the like are restored and raised up by the resilient force of the anode foil.

Similarly, the cathode tab 12 also goes to a state where the first segmented portions 12A and the second segmented portions 12B rise up.

To stabilize the formation state of the anode tab 10 and the cathode tab 12, the storage element 8 is formed by subjecting the anode tab 10 and the cathode tab 12 to pressure from the tip side toward the element end face side with a pressing jig 40, as shown in Fig. 6B for example. By applying pressure for forming process in this manner, the anode tab 10 and the cathode tab 12 can prevent their respective segmented portions from rising up.

The prevention of rise-up of the anode tab 10 and the cathode tab 12 leads to increase in the area of welding and contact with the current collector plate 14 or the case bottom surface portion. Furthermore, pressing allows the anode tab 10 to follow and rise up to a predetermined height and keep the state in case that the current collector plate 14 is displaced in the separation direction as a result of pressure rise within the accommodating part 6. This enables the storage cell 2 to prevent the anode tab 10 from breaking the instant that the internal pressure starts rising for example, rendering it possible to adjust the execution of current cutoff in response to the internal pressure value.

### <Process of Connection between Storage Element 8 and Current Collector Plate 14>

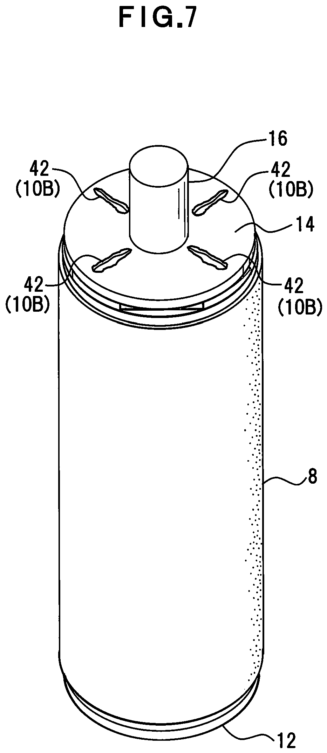

The current collector plate 14 is placed, via its connecting surface, on the anode tab 10 side of the storage element 8, as shown in Fig. 7 for example. The current collector plate 14 is irradiated with laser from the surface side opposite to the connecting surface for example so that the process of welding between the current collector plate 14 and the anode tab 10 is performed. In the welding process, laser is irradiated on positions of the second segmented portions 10B formed on the anode tab 10, to form weld portions 42.

For the laser irradiation, for example, an inert gas such as argon gas or helium gas is preferably used as a shield gas to shield the storage element 8, thereby avoiding the effects of laser heat and spatter on the storage element 8. The cathode tab 12 side of the storage element 8 is accommodated within the accommodating part 6 not shown, for example, and laser is then irradiated from outside of the exterior case 4 onto the bottom, to perform welding process.

### <State Example When Current Cutoff Function Works>

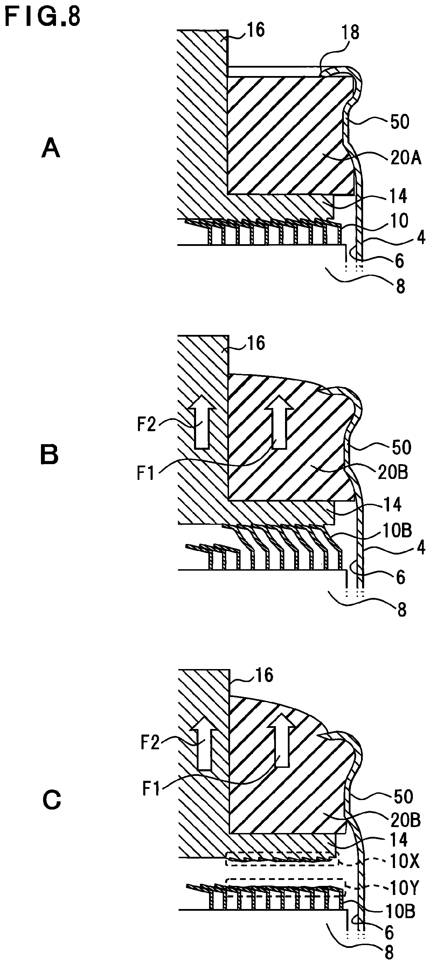

As shown in Fig. 8A for example, in the storage cell 2, the anode tab 10 of the storage element 8 and the current collector plate 14 are in intimate contact with each other before generating current or during normal operation, keeping electrical connection between the storage element 8 and the external terminal 16. At this time, the sealing member 20A is pressed from the periphery toward the case center by a cramping portion 50 formed on the outer peripheral side of the exterior case 4, allowing intimate contact with the inner wall surface of the case. This enables the sealing member 20A to remain at its initial position irrespective of occurrence of low internal pressure.

As shown in Fig. 8B for example, in the storage cell 2, when the internal pressure rises as a result of occurrence of gas within the accommodating part 6, the current collector plate 14 and the external terminal 16 are displaced accompanying the sealing member 20B deformed and displaced toward the opening 18.

By the frictional resistance with the case inner wall surface caused by the pressing force from the cramping portion 50, the sealing member 20B has an opposing state against the force toward the opening 18 arising from the internal pressure, thereby keeping slightly displaced state.

At this time, in the anode tab 10 of the storage element 8, for example, the second segmented portions 10B are slightly raised up by the displacement of the current collector plate 14 welded thereto. Such a slight rise-up of the anode tab 10 avoids the broken state, keeping connection with the current collector plate 14.

As shown in Fig. 8C for example, in the storage cell 2, when an internal pressure F1 within the accommodating part 6 exceeds a predetermined value, the external terminal 16 is subjected to a tensile force F2 by the sealing member 20B displaced or deformed to a great extent toward the opening 18.

The current collector plate 14 integrated with the external terminal 16 is displaced to a great extent toward the opening 18 by the tensile force F2. As a result, the anode tab 10 is broken by the tensile force F2, releasing connection with the current collector plate 14.

### <Effects of First Embodiment>

According to such a configuration, the following effects can be obtained.
(1) Current cutoff can be achieved between the storage element 8 and the external terminal 16 by breaking the anode tab 10 by the displacement of the current collector plate 14 against the rise of the internal pressure generated within the accommodating part 6 of the exterior case 4.
(2) By breaking the anode tab 10 of the storage element 8, there is no need to dispose a component for current cutoff within the interior of the storage cell 2, enabling it to prevent the number of components and the assembling loads from increasing.
(3) By welding the current collector plate 14 and the anode tab 10 together and breaking the anode tab 10 against the rise of the internal pressure, it is possible to suppress the contact resistance on the connecting portion between the storage element 8 and the external terminal 16.
(4) Since the small-diameter external terminal 16 arranged on the center axis or at a position close thereto of the storage cell 2 is subjected to the tensile force from the sealing member 20 to displace the current collector plate 14, it is possible to displace the current collector plate 14 toward the opening 18 irrespective of the state of pressure inside the case, to securely release the connection with the anode tab 10.

### [Second Embodiment]

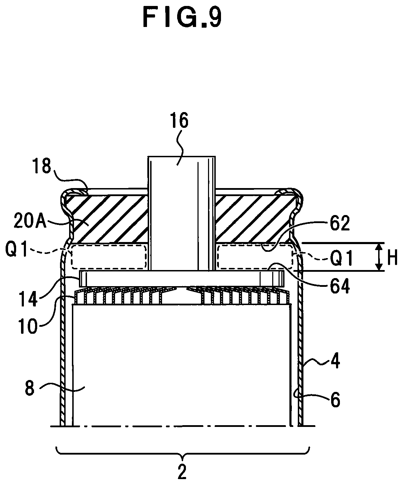

Fig. 9 shows a configuration example of a storage cell according to a second embodiment. The configuration shown in Fig. 9 is a mere example and the technique of the present disclosure is not limited to such a configuration. In Fig. 9, the same reference numerals are given to the same portions as in Figs. 1 and 3.

As shown in Fig. 9 for example, this storage cell 2 includes a space Q1 defined between confronting surfaces of the current collector plate 14 and the sealing member 20A inside the accommodating part 6 before operation or when the internal pressure is less than or equal to a predetermined value. That is, the confronting surfaces of the current collector plate 14 and the sealing member 20A are not in contact with each other with a gap therebetween. This space Q1 is a part of a functional unit providing a current cutoff function of the storage cell 2, or an example of an auxiliary functional unit allowing the current cutoff function to operate more effectively, and is a means allowing the internal pressure within the accommodating part 6 to act over a wider area on the flat surface of the sealing member 20A. The space Q1 has a width H that is set depending on the state of arrangement of the current collector plate 14 and the sealing member 20A.

The width H of the space Q1 is preferably, for example, 1 to 3 [mm] or more, and more preferably, 2 [mm] or more. Such a setting condition of the width H is to displace the current collector plate 14 and the external terminal 16, for example, without impeding the deformation of the sealing member 20 by at least the internal pressure F1 occurring within the accommodating part 6. In an experimental example of this setting condition, among different widths H imparted to the storage cell 2, a width H is preferably set that allows the deformation or the amount of displacement of the sealing member 20 to be 2 [mm] or more when the internal pressure F1 reaches 1.5 [MPa] for example.

The insertion hole 22 (Fig. 3) of the sealing member 20A is formed, for example, to have a diameter equal to or slightly smaller than the outer diameter of the external terminal 16. This enables the sealing member 20A to be positioned at any position on the external terminal 16, for example, at a step of inserting the external terminal 16 into the insertion hole 22 in the assembling process of the storage cell 2. This enables the sealing member 20A to set a predetermined width H for the current collector plate 14 integrated with the external terminal 16. By cramping the sealing member 20A from the outer peripheral surface of the exterior case 4, the inner wall surface of the insertion hole 22 and the outer peripheral surface of the external terminal 16 are in press contact with each other so that the width H is fixed for the current collector plate 14.

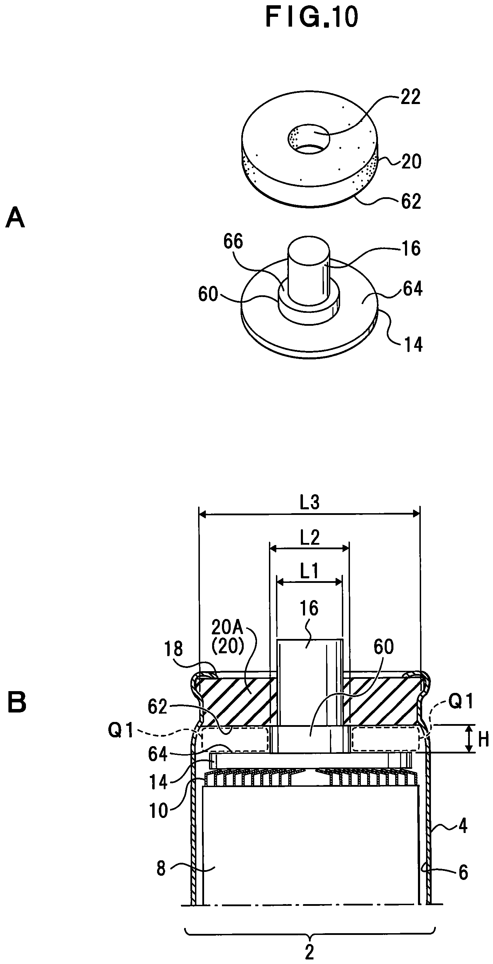

A means of setting the position to arrange the sealing member 20A will then be described. Fig. 10A shows a configuration example around a terminal component, while B shows a configuration example of the cutoff function. The configurations shown in Fig. 10 are mere examples.

As shown in Fig. 10A for example, the terminal component includes a shoulder 60 at a portion connecting the current collector plate 14 and the external terminal 16 or at a position close thereto. The shoulder 60 is an example of, e.g., a spacer of the present disclosure for separating the current collector plate 14 and the sealing member 20 from each other. For example, the shoulder 60 is a component forming a mount 66 on which a flat surface portion 62 of the sealing member 20 is partially mounted at a position higher than a back surface portion 64 of the current collector plate 14, and around a circumferential portion of the external terminal 16. For example, the shoulder 60 may be formed integrally with one or both of the current collector plate 14 and the external terminal 16 using the same material, or may be configured from a separate ring-shaped member having a hole equal in diameter to the insertion hole 22 of the sealing member 20.

### <Configuration and Assembling Process of Shoulder 60>

The assembling process of the storage cell 2 preferably includes, for example, a process of inserting the ring-shaped shoulder 60 configured from a separate member into the external terminal 16, to integrate the shoulder 60 with the current collector plate 14. The process of inserting the shoulder 60 as the separate member into the external terminal 16 may be performed before connecting the current collector plate 14 to the storage element 8 or may be performed after welding the current collector plate 14 to the storage element 8.

Thus, in the storage cell 2, as shown in Fig. 10B for example, prior to the operation or when the internal pressure is less than or equal to the predetermined value, the shoulder 60 forms the space Q1 with the predetermined width H between the flat surface portion 62 of the sealing member 20A arranged on the opening 18 side of the exterior case 4 and the back surface portion 64 of the current collector plate 14. The formed width H may be equal to the height of the shoulder 60 or may be set depending on the position to arrange the shoulder 60 relative to the current collector plate 14 or the external terminal 16.

For example, the shoulder 60 is arranged with a center axis passing through the current collector plate 14 and the sealing member 20 or with a center axis passing through either thereof as a criterion and is formed to have an outer diameter L2 larger than at least an outer diameter L1 of the external terminal 16. The shoulder 60 is formed sufficiently smaller than an outer diameter L3 of the sealing member 20A. That is, the outer diameter L2 of the shoulder 60 has a relationship of Ll<L2<<L3 relative to the outer diameters L1 and L3 of the external terminal 16 and the sealing member 20A, respectively.

### <About Current Cutoff Function>

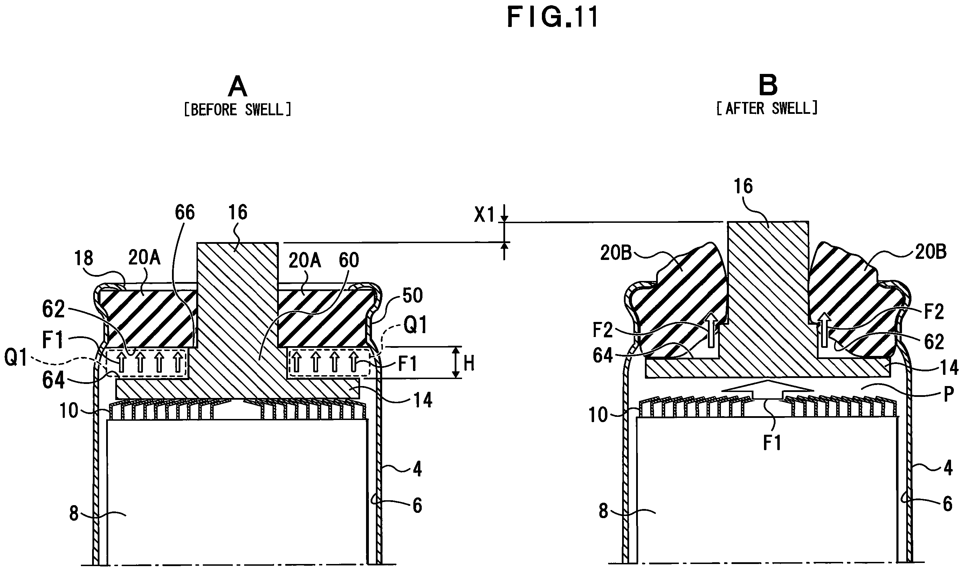

Fig. 11 shows an internal state example of the storage cell. The pressure state and the working state of the sealing member shown in Fig. 11 are mere examples.

In the storage cell 2, as shown in Fig. 11A for example, before the operation or during the normal operation, the anode tab 10 of the storage element 8 and the current collector plate 14 are in intimate contact with each other, keeping connection between the storage element 8 and the external terminal 16. In case that the storage cell 2 is in normal operation, the sealing member 20A is subjected, at a part of the flat surface portion 62, to the internal pressure F1 acting toward the opening 18, for example, through the space Q1 formed by the shoulder 60. At this time, the sealing member 20A maintains its initial shape or a shape approximate thereto against the internal pressure F1 due to rigidity and frictional resistance with the case inner wall arising from pressure toward the case center applied by the cramping portion 50.

The sealing member 20A is pushed up toward the opening 18 when the internal pressure F1 on the flat surface portion 62 increases. At this time, the external terminal 16 receives the tensile force F2 directed toward the opening 18 via the portion in contact with the sealing member 20A. At this time, the sealing member 20A remains left within the opening 18, for example, due to tightening and rigidity imparted by the cramping at the circumferential portion around the opening 18.

When the internal pressure F1 of the accommodating part 6 reaches and exceeds the predetermined value, in the storage cell 2, as shown in Fig. 11B for example, the current collector plate 14 and the external terminal 16 are displaced accompanying the sealing member 20B deformed and displaced toward the opening 18. At this time, the sealing member 20B is displaced to a great extent at portions in contact with the external terminal 16 and the shoulder 60 and at their vicinities so that the sealing member 20B partly expands to be exposed from the opening 18.

When the current collector plate 14 and the external terminal 16 are displaced by the predetermined distance X1 toward the opening 18 within the interior of the storage cell 2, the gap P equal to the displacement occurs between the current collector plate 14 and the anode tab 10, with the result that the anode tab 10 welded to the flat surface portion of the current collector plate 14 breaks, releasing the physical and electrical connections.

Displacement of the current collector plate 14 and the external terminal 16 includes not only the case of being displaced by only the tensile force F2 arising from deformation of the sealing member 20 caused by the internal pressure F1 for example, but also the cases where the flat surface portion of the current collector plate 14 is acted on by the internal pressure F1 generated within the accommodating part 6 and where the both are combined.

### <About Other Configuration Example>

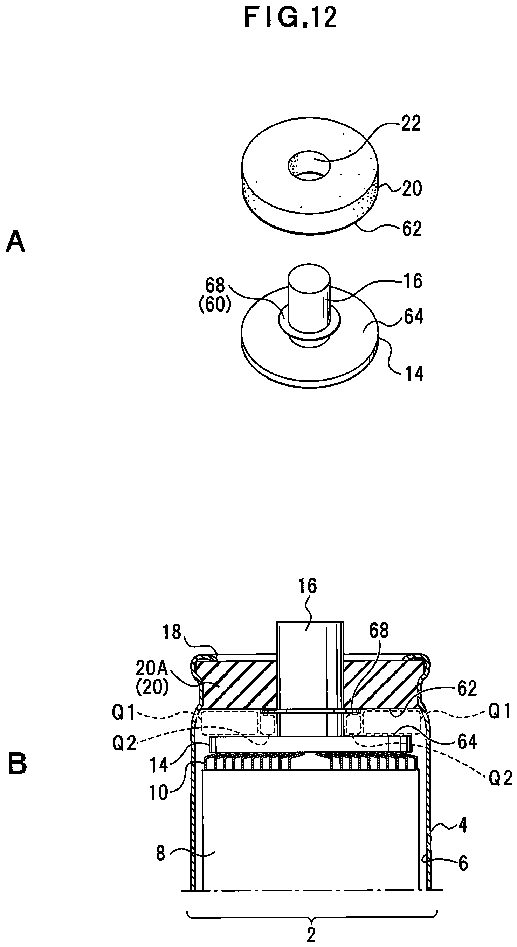

Fig. 12 shows another configuration example of the current collector plate and the external terminal that make up the storage cell. The configuration shown in Fig. 12 is a mere example and the technique of the present disclosure is not limited to such a configuration.

As shown in Fig. 12A for example, the external terminal 16 may include a shelf 68 at a predetermined height from the portion connecting to the current collector plate 14. This shelf 68 is an example of a spacer on which the sealing member 20 arranged with insertion of the external terminal 16 into its insertion hole 22 is mounted to form a space between the current collector plate 14 and the sealing member 20. The shelf 68 may be formed, for example, over the entire circumference of the external terminal 16 or with a predetermined width for each constant angle around the center axis of the external terminal 16.

For example, the width of the shelf 68 is formed sufficiently smaller than the width of the current collector plate 14. This allows the shelf 68 to come into contact with a small circumferential area around the insertion hole 22 of the sealing member 20 for example, to support the sealing member 20 while exposing a wide area on the flat surface portion 62 of the sealing member 20 to the accommodating part 6.

For example, the shelf 68 may be formed integrally with the external terminal 16 using the same material, or may be a separate thin ring-shaped member integrated with the external terminal 16 by welding, adhesive, or the like.

As shown in Fig. 12B for example, the storage cell 2 forms the space Q1 with the predetermined width H (Fig. 9) between the flat surface portion 62 of the sealing member 20A mounted on the shelf 68 and the back surface portion 64 of the current collector plate 14 prior to the operation or when the internal pressure is less than or equal to a predetermined value. The storage cell 2 further forms a space Q2 at a portion where the shelf 68 and the back surface portion 64 of the current collector plate 14 confront.

In this storage cell 2, for example, the area of the flat surface portion 62 of the sealing member 20A facing the space Q1 is subjected to the internal pressure F1 acting toward the opening 18. Furthermore, the external terminal 16 receives the internal pressure F1 directed toward the opening 18, for example, from the space Q2 defined by the shelf 68. In the storage cell 2, when the internal pressure F1 exceeds the predetermined value, the external terminal 16 and the current collector plate 14 are separated from the storage element 8 to release connection with the anode tab 10, by the tensile force F2 induced by displacement and deformation of the sealing member 20B and the force directed toward the opening 18 through the shelf 68.

### <Effects of Second Embodiment>

According to such a configuration, the following effects can be obtained.
(1) The same effects as in the first embodiment can be obtained.
(2) By forming the space Q1 with the predetermined width H between the sealing member 20 and the current collector plate 14, the internal pressure F1 occurring within the accommodating part 6 can act directly on the sealing member 20, facilitating deformation of sealing member 20. This facilitates displacement of the current collector plate 14 and the external terminal 16, enabling the current cutoff function to work properly.
(3) By setting the state of action of the internal pressure F1 on the sealing member 20 depending on at least the lateral width and height of the space Q1, the working state of the current cutoff function can be adjusted.
(4) The space Q2 is formed between the shelf 68 and the current collector plate 14, the external terminal 16 and the current collector plate 14 allow the internal pressure F1 to act toward the opening 18 through the shelf 68, and the current cutoff function can work properly.

### [Example]

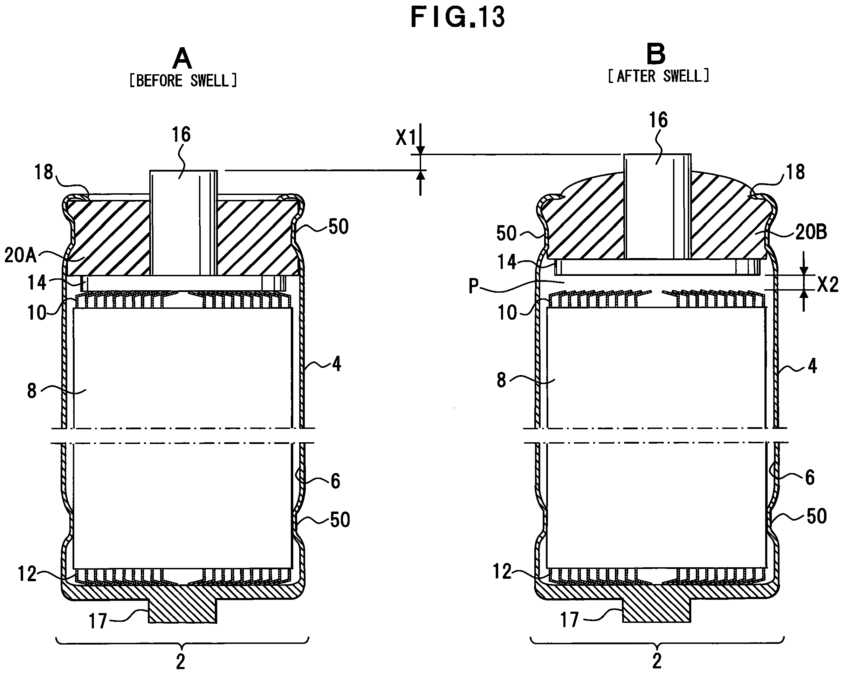

Fig. 13 shows a configuration example of a storage cell according to Example.

As shown in Fig. 13A for example, this storage cell 2 includes one or more cramping portions 50 formed from the outside of the exterior case 4 in accordance with the arrangement position of the body portion of the storage element 8 accommodated within the accommodating part 6, i.e., the arrangement position of the laminated portion of the anode foil 30, the cathode foil 32, and the separator 34. This brings the storage element 8 into contact with the inner wall surface of the accommodating part 6 at the cramping portion(s) 50.

In the storage cell 2, as shown in Fig. 13B for example, in case that the internal pressure within the accommodating part 6 rises to cause displacement toward the opening 18 side of the current collector plate 14, the external terminal 16, and the sealing member 20B, the storage element 8 can stay at its initial position within the accommodating part 6 against the tensile force due to pressing from the cramping portion(s) 50. By fixing the arrangement position of the storage element 8 within the accommodating part 6 in this manner, the anode tab 10 can be prevented from following the displacement of the current collector plate 14, ensuring proper working of the current cutoff function for the predetermined internal pressure value.

The most preferred embodiments of the technique of the present disclosure have hereinabove been described. The technique of the present disclosure is not intended to be limited to the above description. Various modifications and alterations are possible by those skilled in the art, based on the gist described in claims or disclosed in the modes for carrying out the invention. It is natural that such modifications and alterations be encompassed in the scope of the technique of the present disclosure.

### INDUSTRIAL APPLICABILITY

The storage cell and the method for manufacturing the same of the present disclosure are useful in that the current cutoff function can work by breaking a part of the storage element by the displacement of the current collector plate subjected to the tensile force through the external terminal, in response to the displacement and deformation of the sealing member caused by the raised pressure within the interior of the case.

### REFERENCE SIGNS LIST

- 2: storage cell
- 4: exterior case
- 6: accommodating part
- 8: storage element
- 10: anode tab
- 10A, 12A: first segmented portion
- 10B, 12B: second segmented portion
- 10X: fragment
- 10Y: tear mark
- 12: cathode tab
- 14: current collector plate
- 16, 17: external terminal
- 18: opening
- 20, 20A, 20B: sealing member
- 22: insertion hole
- 30: anode foil
- 32: cathode foil
- 34: separator
- 36: anode protrusion
- 38: cathode protrusion
- 40: pressing jig
- 42: weld portion
- 50: cramping portion
- 60: shoulder
- 62: flat surface portion
- 64: back surface portion
- 66: mount
- 68: shelf

## Claims

1. A storage cell comprising:
a storage element having on its different end faces a cathode-side electrode tab and an anode-side electrode tab, respectively;
a case accommodating the storage element within an accommodating part having an opening;
a current collector plate formed integrally with an external terminal, the current collector plate connecting to the electrode tab arranged on the opening side; and
a sealing member sealing the opening, the sealing member being deformable toward the opening by an internal pressure within the accommodating part, wherein
the current collector plate is displaced toward the opening accompanying deformation of the sealing member so that connection with the electrode tab is released when a predetermined displacement amount is exceeded.

2. The storage cell of claim 1, wherein
when the current collector plate is displaced toward the opening of the case, the electrode tab of the storage element breaks at a portion joining with the current collector plate or at its vicinity so that connection with the current collector plate is released.

3. The storage cell of claim 1 or 2, wherein
the current collector plate and the electrode tab are welded together.

4. The storage cell of any one of claims 1 to 3, wherein
the sealing member has a through-hole formed at a part of sealing surface portion, the external terminal is fitted into the through-hole, and the sealing member is cramped from an outer circumferential surface of the case so as to come into press contact with the case.

5. The storage cell of any one of claims 1 to 4, further comprising:
a space portion defined between the current collector plate and the sealing member.

6. The storage cell of claim 5, comprising:
a spacer having a mount on which at least a part of the sealing member is mounted, the spacer making the space portion formed between confronting surfaces of the sealing member and the current collector plate.

7. The storage cell of claim 6, wherein
the spacer is formed to have a diameter smaller than width of the sealing member disposed on the opening side.

8. The storage cell of any one of claims 1 to 7, wherein
the electrode tab comprises segmented portions obtained by segmenting electrode foils protruding from an end face of the storage element by a predetermined angle around a central portion of the element, the electrode tab comprising a plurality of connecting surface portions bent toward the end face for each of the segmented portions.

9. The storage cell of any one of claims 1 to 8, wherein
the case comprises a cramping portion pressing an arrangement position of the storage element from exterior side, to bring an inner wall surface into contact with a part of a body portion of the storage element.

10. A method for manufacturing a storage cell, comprising the steps of:
forming a cathode-side electrode tab or an anode-side electrode tab on a different end face of a storage element by allowing a part of laminated cathode foils or anode foils to protrude from the different end face and bending protrusions thereof;
accommodating the storage element within an accommodating part of a case having an opening on one side;
connecting a current collector plate formed integrally with an external terminal to the electrode tab arranged on the opening side; and
sealing the opening with a sealing member configured to deform toward the opening by an internal pressure within the accommodating part to displace the current collector plate.

11. The method for manufacturing a storage cell of claim 10, further comprising the step of:
forming a space portion between the current collector plate and the sealing member.

12. The method for manufacturing a storage cell of claim 11, comprising the step of:
arranging a spacer having a mount on which at least a part of the sealing member is mounted, between confronting surfaces of the sealing member and the current collector plate to form the space portion.
